# EUROPEAN PATENT APPLICATION

(11) **EP 2 860 860 A2**
(43) Date of publication of application: **15.04.2015**
(21) Application number: 13801229.9
(22) Date of filing: 07.06.2013
(51) Int. Cl.: H02K 19/06, H02K 1/17

(54) **BRUSHLESS ELECTRIC MACHINE**

(30) Priority: 09.06.2012 RU 2012124209
(71) Applicant: Dmitrievskii, Vladimir Aleksandrovich, Nizhnii Tagil 622034 (RU); Prakht, Vladimir Alekseevich, Nizhnii Tagil 622055 (RU)
(72) Inventor: Dmitrievskii, Vladimir Aleksandrovich, Nizhnii Tagil 622034 (RU); Prakht, Vladimir Alekseevich, Nizhnii Tagil 622055 (RU)
(74) Representative: Moore, Michael Richard
(86) International application number: PCT/RU2013/000473
(87) International publication number: WO 2013/184039

(57) **Abstract**

The invention relates to electrical engineering and electric machines with stator-mounted magnets, and can be used in electric drives for machines and mechanisms as well as in electric power generators. A brushless machine contains a rotor comprising a shaft and at least one toothed fragment thereon, said toothed fragment having teeth positioned along the boundary of a gap. A stator comprises a toothed magnetic core and a winding, the coils of which are placed in the slots of the magnetic core of the stator. A multipolar magnetic system is made of a hard magnetic material, positioned between the rotor and the magnetic core of the stator, affixed to the stator and magnetized in such a way that an equal number of alternating opposite poles are arranged on the surfaces of the stator teeth, which teeth face the gap along the direction of rotation of the rotor. The stator is in the form of a solid of revolution with a plurality of teeth positioned along the axis of rotation of the rotor. Each coil of the winding is placed in one stator slot. Only the teeth of one toothed fragment of the rotor are positioned over each stator tooth. The number of teeth on each of the toothed fragment equals half of the number of poles found on a single stator tooth. The essence of the invention consists in increasing the power density of an electric machine and decreasing the mass of active materials.

## Description

The invention relates to electrical engineering, and more particularly, to electric machines with stator-mounted magnets, which can be used in electric drives of machines and mechanisms as well as in electric power generators.

Disclosed in [Wei Hua ; Xiaoyong Zhu; Xiangxin Kong; Jianzhong Zhang; Wenxiang Zhao. Stator-permanent magnet brushless machines: Concepts, Developments and Applications. Electrical Machines and Systems, 2008. ICEMS 2008. International Conference on 17-20 Oct. 2008. Pages: 2802 - 2807] is a brushless electric machine comprising a toothed stator, a toothed rotor, a winding inserted into the stator slots, and magnets disposed in the stator yokes. With such arrangement, a considerable part of the magnetic flux, created by the magnets, is closed outside the motor, which reduces power density and impairs output performances of the electric machine.

Similar drawbacks are revealed in a machine with magnets disposed in stator teeth, comprising a toothed rotor, a stator composed of C-shaped segments, and magnets disposed in the stator teeth [ibid].

The closest prior art is deemed to be found in a single-phase electric machine with magnets mounted on the stator teeth [Rajesh P. Deodhar, Svante Andersson, Ion Boldea, and Timothy J. E. Miller.The Flux-Reversal Machine: A New Brushless Doubly-Salient Permanent-Magnet Machine. IEEE TRANSACTIONS ON INDUSTRY APPLICATIONS, VOL. 33, NO. 4, JULY/AUGUST 1997], which has a three-tooth rotor and a two-tooth stator, a double-layer winding on the stator, and a magnetic system, which is disposed on the surface of the stator teeth and has magnets, two on each of the stator teeth, thus forming two magnetic poles on each of the stator teeth. Located on the neighboring teeth, the adjacent poles are of opposite polarity. In such machine, only 2/3 of the airgap surface is utilized, which reduces power density, increases mass of active materials and results in increased costs of the machine. Moreover, the end coils not being involved in the generation of the magnetic field, reduces the power density of the electric machine and increases the mass of active materials.

It is the purpose of the present invention to increase power density of an electric machine and to reduce the mass of active materials.

The above stated purpose is achieved by the following. A brushless machine comprises: a rotor containing a shaft and at least one toothed rotor fragment thereon, said toothed rotor fragment having teeth disposed along the boundary of a gap; a stator comprising a toothed magnetic core, a winding with the coils placed in the slots of the magnetic core of the stator; and a multipolar magnetic system, made of a hard magnetic material, the said system disposed between the rotor and the magnetic core of the stator, affixed to the stator and magnetized in such a way that an equal number of alternating opposite poles are arranged on the surface of the stator teeth, which teeth facing the gap along the direction of rotation of the rotor; the stator is configured in the form of a solid of rotation with a plurality of teeth disposed along the axis of rotation; each coil of the winding is inserted in one stator slot; only the teeth of one toothed fragment of the rotor are disposed over each stator tooth; the number of teeth on each of the toothed fragments equals half the number of poles found on a single stator tooth.

In an embodiment of the brushless electric machine, winding may be configured single-phase, and provided that there is more than one tooth, the conventional current directions are opposite in the adjacent slots, with the rotor and the magnetic system being configured in such a way that when the rotor teeth are aligned over the north poles of a certain stator tooth, the rotor teeth are found to be disposed over the south poles of the adjacent stator tooth.

In an embodiment of the brushless electric machine, the winding may be configured poly-phase, with the rotor and the magnetic system being configured so that when the teeth of a toothed fragment of the rotor are aligned over the north poles of a certain stator tooth, the teeth of the toothed fragment of the rotor located over the adjacent tooth are shifted relative to the north poles thereof in order to provide the phase shifting required.

In an embodiment of the brushless electric machine, the rotor may be configured in such a way that the sections of its toothed fragments perpendicular to the axis of rotation have a reflection symmetry line.

In an embodiment of the brushless electric machine, the rotor may be configured in such a way that the sections of its toothed fragments perpendicular to the axis of rotation have no reflection symmetry line.

In an embodiment of the brushless electric machine, the magnetic system may be configured in a monolithic form.

In an embodiment of the brushless electric machine, the magnetic system may be configured consisting of separate magnets.

In an embodiment of the brushless electric machine, along the axis of rotor rotation, there may be a plurality of magnets electrically insulated one from another.

In an embodiment of the brushless electric machine, the magnetic system may be configured from magnets having remanent magnetization directed away from the rotor rotation axis and towards the rotor rotation axis. Between the magnets located on one tooth and/or on the adjacent teeth having the opposite remanent magnetizations, there may be a nonmagnetic region.

In an embodiment of the brushless electric machine, the magnetic system may be configured in such a way that between the adjacent poles of the magnetic system with the opposite polarities the remanent magnetization is directed in or counter the direction of rotor rotation and the remanent magnetization induces formation of the poles of the magnetic system.

In an embodiment of the brushless electric machine, the rotor may be disposed inside the stator or the stator may be disposed inside the rotor.

In an embodiment of the brushless electric machine, the stator teeth and the magnetic system on the stator may be configured skewed relative to the rotor teeth.

In an embodiment of the brushless electric machine, magnets of a rectangular cross section may be used.

In an embodiment of the brushless electric machine, the stator magnetic core may be configured dismountable.

The essence of the proposed invention is explained further with reference to the accompanying drawings, wherein:
Fig. 1 shows a schematic drawing of a single-phase electric machine comprising a two-tooth stator and one toothed fragment of the rotor;
Fig. 2 shows a schematic drawing of a single-phase electric machine comprising a three-tooth stator and two coils of winding, with one toothed fragment of the rotor comprising three teeth.
Fig. 3 shows a schematic drawing of a toothed fragment of the rotor, which cross section, perpendicular to the rotation axis, has a reflection symmetry line.
Fig. 4 shows a schematic drawing of a toothed fragment of the rotor providing a non-uniform airgap;
Fig. 5 shows a schematic drawing of a toothed fragment of the rotor with a bevel on one face of the tooth;
Fig. 6 shows a schematic drawing of a toothed fragment of the rotor, wherein faces of a tooth are configured at various angles to the airgap between rotor and stator;
Fig. 7 shows a schematic drawing of a two-phase electric machine comprising a three-tooth stator and two coils of winding, with a magnetic system and a rotor shown separately at a larger magnification;
Fig. 8 shows a schematic drawing of a single-phase electric machine comprising a two-tooth stator and two ring gear fragments of the rotor.

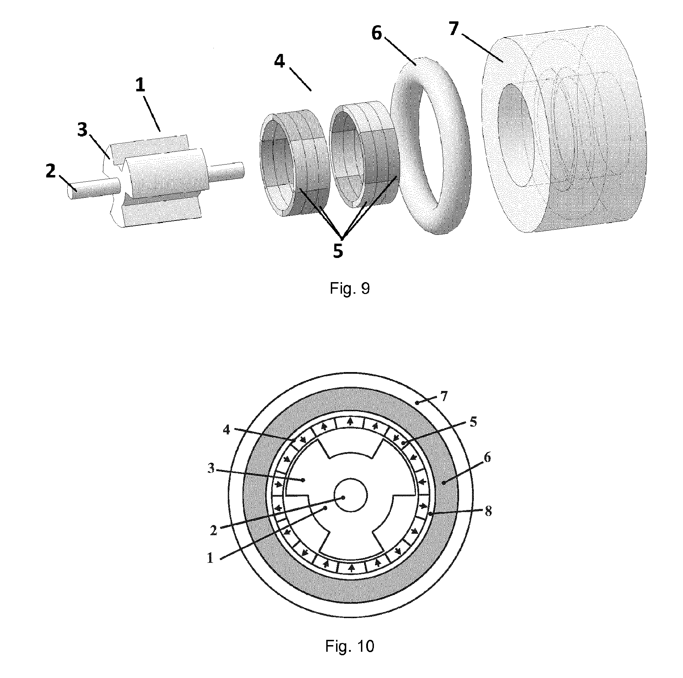

Fig. 9 shows a schematic drawing of a single-phase electric machine comprising a two-tooth stator, wherein a number of magnets along the rotor rotation axis are insulated one from another;
Fig. 10 shows the cross section of a brushless electric machine comprising a plurality of electrically insulated magnets disposed along the rotation direction of rotor;
Fig. 11 shows the cross section of a brushless electric machine comprising non-magnetic regions disposed between magnets along the rotation direction of rotor;
Fig. 12 shows the cross section of a brushless electric machine comprising magnetization regions magnetized in or counter the rotation direction of rotor;
Fig. 13 shows a schematic drawing of a single-phase electric machine comprising a dismountable stator.

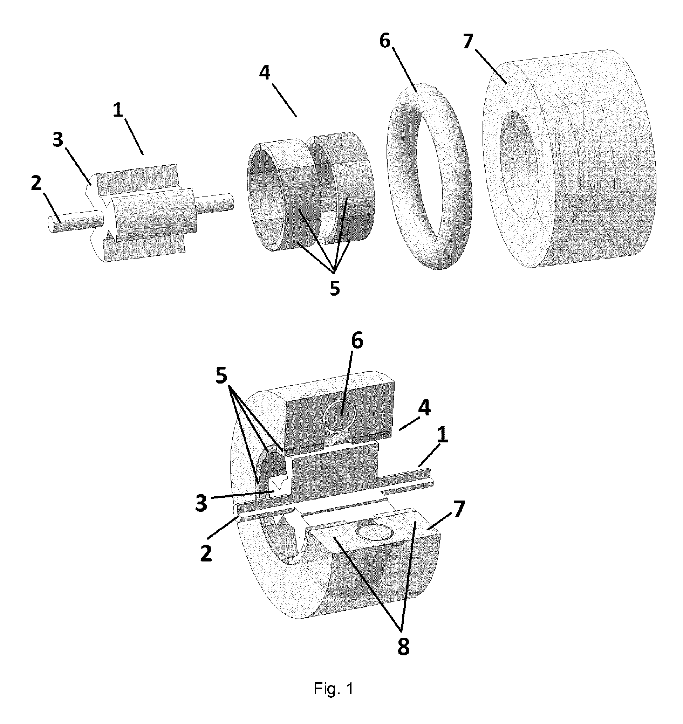

The claimed brushless electric machine (Fig. 1) configured as a single-phase embodiment comprises a rotor 1 including a shaft 2 with a toothed fragment 3 mounted thereon and a stator comprising a magnetic system 4 composed of separate magnets 5 or configured monolithically from polymer-bonded magnetic material, a coil 6, and a stator magnetic core 7.

A coil 6 in the form of a ring is disposed in a slot of the stator magnetic core. The slot is located in the middle of the internal surface of the stator magnetic core. Disposed on the stator teeth 8 is the magnetic system 4, which is configured of separate magnets 5 magnetized in the radial direction and having alternate polarity as shown in the figure, or is configured as a continuous multipole polymer-bonded magnetic material. The magnets having remanent magnetization directed away from the rotation axis are shown darker than the magnets having remanent magnetization directed towards the rotation axis.

Among the rotor positions in the brushless electric machine claimed, there are two positions (hereinafter referred to as "salient positions") which are characterized in that the rotor teeth are found to be only over the magnets of the same magnetization, located on one and the same tooth, with the adjacent teeth having the opposite magnetizations.

The principle of operation of the claimed brushless electric machine of a single-phase configuration in the generator mode is as follows.

In the salient positions, the magnetic flux through the stator yoke is the opposite in sign and the maximum in value. It is this magnetic flux that forms the major part of the flux through the coil. Therefore, as the rotor moves between the two salient positions, the magnetic flux keeps changing continually. According to the electromagnetic induction law, an electromotive force (EMF) is induced in the coil. As the current runs in the coil in the direction opposite to the EMF, the machine consumes the electric energy, which transforms into the mechanical energy of the rotor rotation. If the EMF direction coincides with the current direction, then the machine generates the electric energy by transforming the mechanical energy of the rotating rotor.

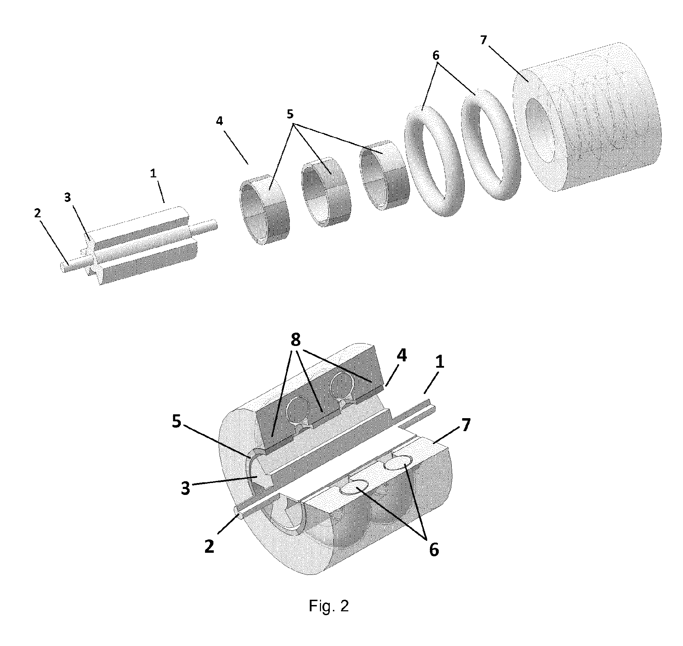

If the stator of a brushless electric machine of a single-phase configuration has a plurality of slots (Fig. 2), the currents in the cross sections of coils placed in the adjacent slots have the opposite directions.

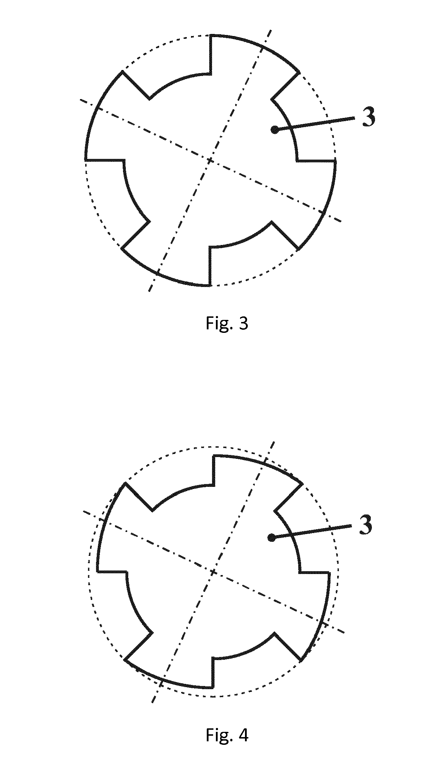

When the claimed electric machine of a single-phase configuration is used as a generator, a rotor 1, with the cross section of a ring gear fragment 3 being perpendicular to the axis of rotation, may have a reflection symmetry line. Figure 3 shows an example of such rotor, with some of the reflection symmetry lines shown as dash-dot lines.

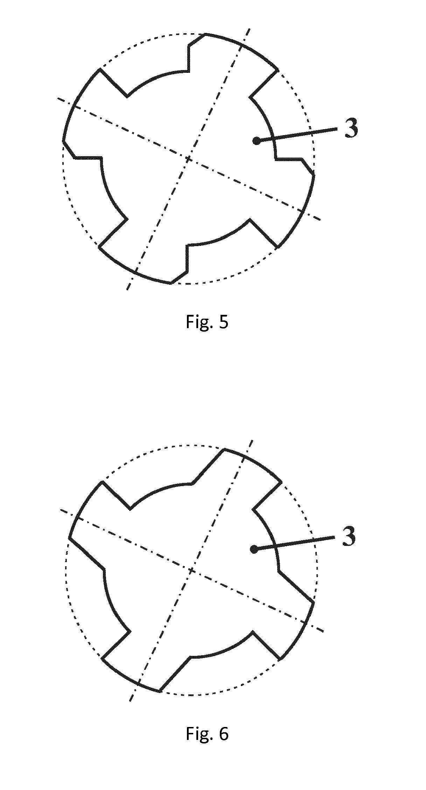

When the claimed brushless electric machine of a single-phase configuration is used as an engine, a starting feature has to be enabled. To this end, rotor 1 is configured asymmetrical so that in the absence of electric power supply the rotor's equilibrium position is displaced from the position wherein the teeth of rotor 1 are placed strictly against the poles, which generates a starting torque upon energizing. Asymmetry of the rotor may comprise asymmetry of the airgap between the toothed rotor 3 segments and the magnetic core of the stator (Fig. 4); the rotor asymmetry may comprise the teeth of the toothed rotor 3 configured in such a way that the faces of the teeth adjacent to the airgap are disposed at a variable angle to the normal to the airgap, such as, for example, shown in Fig. 5 or Fig. 6. The rotor may also have asymmetry in the form of an asymmetric cut.

In a multi-phase configuration, windings of the claimed brushless machine usually form a multi-phase system with asymmetry of phases. However, the claimed brushless electric machine of a multiphase configuration in any position can generate a starting torque in any direction of rotation of the rotor. Therefore, in a multiphase configuration, the claimed electric machine can be utilized in apparatuses, wherein rotation in two directions is required.

In an embodiment of the brushless electric machine of a multiphase configuration (as well as in a single-phase configuration embodiment), corresponding to each stator tooth, of the rotor positions there are two positions (hereinafter, salient positions), which are characterized in that the rotor teeth are found to be disposed only over the magnets of the same magnetization, placed on this given tooth.

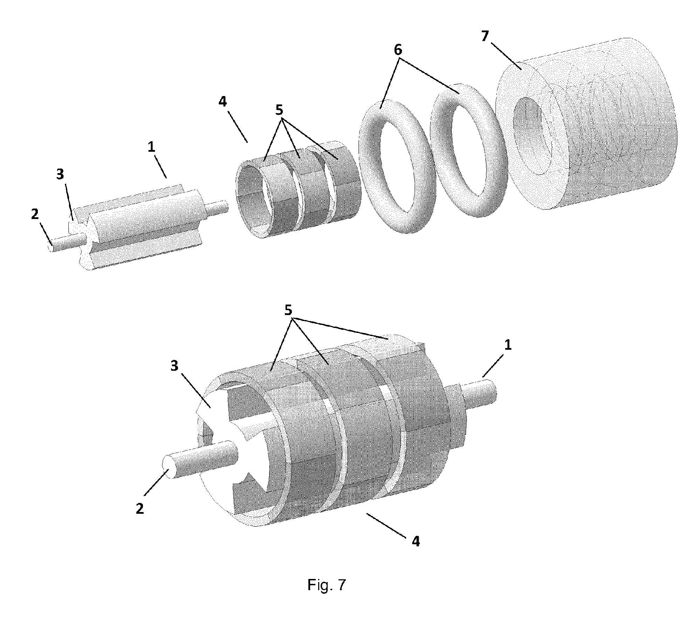

The brushless machine of a multiphase configuration differs from the brushless machine of a single-phase configuration in that the salient positions of the rotor do not coincide for some teeth of the stator. That results in the fact that between the EMF in winding coils of the stator there is a phase shift, non-equal to 0° or to 180°, which makes it possible to form a multiphase winding of the coils. The two-phase winding brushless electric machine is shown in Fig. 7.

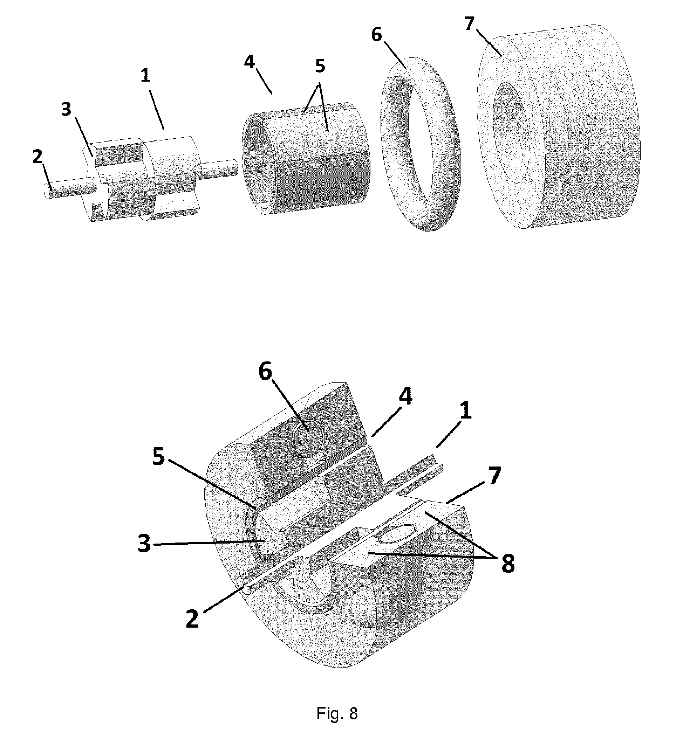

The rotor of the claimed brushless electric machine may comprise a plurality of toothed fragments shifted one relative to another at a certain angle. In particular, this can result in the required phase shifts between the EMFs of the stator coils even under the condition that the nearest poles disposed on the adjacent teeth are found to be of the same polarity, which enables the magnetic system to be configured of uniformly magnetized magnets that pass throughout the entire active zone of the electric machine along the axis of rotation of the rotor (Fig. 8).

In order to lower electrical losses in the magnetic system 4, a plurality of magnets 5 are disposed along the axis of rotation of rotor 1 (Fig, 9).

In addition, in order to reduce electrical losses in the magnetic system 4, the angular size of magnets 5 is reduced, in particular, a number of magnets 5 may be installed per one pole (Fig, 10). Magnets 5 having small angular size may be of a rectangular cross section, which makes manufacture of such magnets easier and reduces their price.

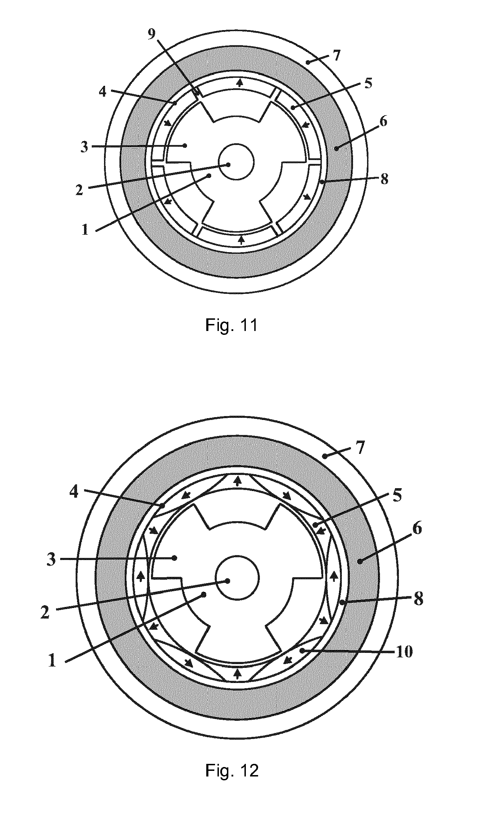

To save on magnets 5, the contacting parts of magnets 5 having different polarity may be replaced with a nonmagnetic region 9 disposed between them (Fig. 11), which region is a gap or a non-electroconductive inclusion, that practically causes no degradation of the electric machine performances so long as the fluxes in the contacting parts are closing on themselves and are, in fact, uninvolved in generating the flux in the airgap. In other words, between the adjacent magnets 5, which form the opposite poles and have the opposite remanent magnetizations directed in or counter the direction of rotation of the rotor, there may be a nonmagnetic region disposed, which is configured as a gap between the magnets or as a nonmagnetic and non-electroconductive inclusion.

Between the adjacent magnets 5 disposed on the neighboring teeth 8 of the stator magnetic core 7 there should reasonably be configured a nonmagnetic region, because magnets 6, which are disposed away from the stator magnetic core, are less involved in generating the useful magnetic flux.

To enhance the useful magnetic flux, there may be a hard-magnetic material 10 disposed between the neighboring opposite poles of the magnetic system 4, which has the magnetization directed in the angular direction (Fig. 12) to induce the formation of poles of the magnetic system 4.

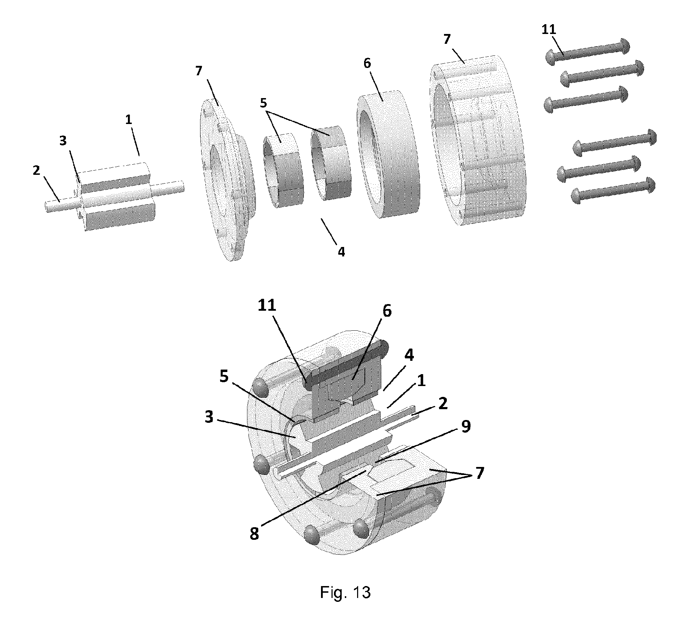

To make winding of coils easier and to reduce costs of the brushless electric machine, the stator magnetic core may be configured dismountable. One of the dismountable stator embodiments is shown in Fig. 13.

In contrast to the closest prior art, the claimed brushless electric machine does not comprise the end coils, which results in the entire winding contributing into generation of the useful magnetic field. As a result, a power density of the electric machine is increased, and the mass of active materials is reduced.

Advantageously the flux return paths are configured much shorter as compared to the closest prior art, which also leads to the reduction in MMF losses in the magnetic core and reduces the weight of the machine.

Advantageously the magnetic system configured of a sufficient number of separate electrically insulated magnets reduces the electrical losses in the magnets.

Advantageously the position of magnets such that between the neighboring magnets, which form the opposite poles and have the opposite remanent magnetizations collinear with the radius vector, there is a nonmagnetic region, reduces the mass of magnets and, hence, reduces the cost of the electric machine.

## Claims

1. A brushless electric machine comprising a rotor containing a shaft and at least one toothed fragment mounted thereon, with the teeth disposed along the circumference of a gap, a stator containing a toothed magnetic core, a winding with coils placed in the slots of the magnetic core of the stator, and a multipolar magnetic system, made of a hard magnetic material, the said system disposed between the rotor and the magnetic core of the stator, affixed to the stator and magnetized in such a way that an equal number of alternating opposite poles are arranged on the surface of the stator teeth, which teeth facing the gap along the direction of rotation of the rotor; **characterized in that** the stator is configured in the form of a solid of rotation with a plurality of teeth disposed along the rotor rotation axis, with each coil of the winding inserted in one stator slot, only the teeth of one toothed fragment of the rotor are disposed over each stator tooth, the number of teeth on each of the ring toothed fragments equals half the number of poles found on a single stator tooth.

2. The brushless electric machine of Claim 1 **characterized in that** the winding is configured as single-phase and, with more than one slot provided, the conventional current directions are opposite in the adjacent slots, with the rotor and the magnetic system being configured in such a way that when the rotor teeth are disposed over the north poles of a certain stator tooth, the rotor teeth are found to be disposed over the south poles of the adjacent stator tooth.

3. **The brushless** electric machine of Claim 1 **characterized in that** the winding is configured poly-phase, with the rotor and the magnetic system being configured such that when the teeth of a toothed fragment of the rotor are disposed over the north poles of a certain stator tooth, the teeth of the toothed fragment of the rotor located over the adjacent tooth are displaced relative to the north poles thereof in order to provide the required phase shifting.

4. The brushless electric machine of Claim 1 **characterized in that** the rotor is configured such that the sections of its toothed ring gear fragments perpendicular to the axis of rotation have a reflection symmetry line.

5. The brushless electric machine of Claim 1 **characterized in that** the rotor is configured such that the sections of its toothed ring gear fragments perpendicular to the axis of rotation have no reflection symmetry line.

6. The brushless electric machine of Claim 1 **characterized in that** the magnetic system is configured as a monolithic form.

7. The brushless electric machine of Claim 1 **characterized in that** the magnetic system is configured as composed of separate magnets.

8. The brushless electric machine of Claim 7 **characterized in that** along the axis of rotor rotation, there disposed a plurality of magnets electrically insulated one from another.

9. The brushless electric machine of Claim 7 **characterized in that** along the direction of rotor rotation, there disposed a plurality of magnets electrically insulated one from another.

10. The brushless electric machine of Claim 7 **characterized in that** the magnetic system is configured of magnets having the remanent magnetization directed from the axis of rotor rotation and to the axis of rotor rotation.

11. The brushless electric machine of Claim 10 **characterized in that** a nonmagnetic region is disposed between magnets placed on one tooth and having the opposite remanent magnetizations.

12. The brushless electric machine of Claim 7 **characterized in that** a nonmagnetic region is disposed between magnets placed on adjacent teeth.

13. The brushless electric machine of Claim 7 **characterized in that** the magnetic system is configured such that between the adjacent opposite poles of the magnetic system the remanent magnetization is directed in or counter the direction of rotor rotation and induces formation of the poles of the magnetic system.

14. The brushless electric machine of Claim 1 **characterized in that** the rotor is disposed inside the stator.

15. The brushless electric machine of Claim 1 **characterized in that** the stator is disposed inside the rotor.

16. The brushless electric machine of Claim 1 **characterized in that** the stator teeth and the stator-mounted magnetic system are configured skewed relative to the rotor teeth.

17. The brushless electric machine of Claim 7 **characterized in that** magnets of a rectangular cross section are used.

18. The brushless electric machine of Claim 1 **characterized in that** the magnetic core of the stator is configured dismountable
